# EUROPEAN PATENT APPLICATION

(11) **EP 4 420 773 A1**
(43) Date of publication of application: **28.08.2024**
(21) Application number: 23209869.9
(22) Date of filing: 14.11.2023
(51) Int. Cl.: B01J 20/22, B01J 20/26, B01J 20/34, B01D 53/02, B01D 53/04

(54) **CARBON DIOXIDE ADSORBENT AND CARBON DIOXIDE ADSORPTION-DESORPTION DEVICE**

(30) Priority: 21.02.2023 JP 2023025440
(71) Applicant: Kabushiki Kaisha Toshiba, Tokyo 105-0023 (JP)
(72) Inventor: SAITO, Hitomi, Tokyo, 105-0023 (JP); YOSHIMURA, Reiko, Tokyo, 105-0023 (JP); SHINJO, Yasushi, Tokyo, 105-0023 (JP)
(74) Representative: Marks & Clerk LLP

(57) **Abstract**

A carbon dioxide adsorbent is provided. The carbon dioxide adsorbent is capable of adsorbing and desorbing carbon dioxide and includes one or more cyclic disulfide structures.

## Description

### FIELD

The present disclosure relates to a carbon dioxide adsorbent and a carbon dioxide adsorption-desorption device.

### BACKGROUND

A technique for causing carbon dioxide (CO₂) to be absorbed into an absorbent such as an amine is used in a carbon dioxide capture and storage (CCS) plant such as a thermal power plant and is regarded as a most promising candidate as a technique for global warming prevention. The absorbent that has absorbed carbon dioxide is generally heated in a regeneration tower, thereby being regenerated by releasing the carbon dioxide, and repeatedly used. A general temperature for heating there is about 140°C, consuming great energy. Heat and energy required for regeneration are also called heat duty or energy penalty. If this heating temperature can be lowered to efficiently release carbon dioxide, energy reduction can be achieved, allowing promotion of the spread of this technique as a technique for global warming prevention.

As an energy-saving regeneration method, there is a method by which adsorbed carbon dioxide is substituted with water vapor. Carbon dioxide is released from the adsorbent by a substitution reaction of adsorbed carbon dioxide with water vapor. According to this method, the heating temperature can be lowered to 100°C or lower, but water vapor is contained in the released gas in addition to carbon dioxide. Therefore, the process of cooling the released gas, condensing the water vapor, to thereby separate the water vapor from the carbon dioxide is added at a subsequent stage. Therefore, although energy saving can be achieved as compared with thermal desorption, the method can hardly be said to be optimal as a method for regenerating an absorbent.

On the other hand, there has also been studied a technique of separating carbon dioxide by switching between electrical potentials, instead of heating, using molecules or a polymer containing electroactive groups. By using this method, carbon dioxide can be released without heating, so that the effect of energy saving can be expected. Carbon dioxide separation by potential switching can be roughly classified into two types. In the first of the two types, upon adsorption-desorption of carbon dioxide, charge is accumulated in a reaction moiety to adsorb carbon dioxide. In the other type, carbon dioxide is adsorbed in accompany of bond cleavage. In the latter type in which bond cleavage occurs, ease of recombination greatly affects the reaction efficiency.

### BRIEF DESCRIPTION OF THE DRAWINGS

FIG. 1 is a CO₂ adsorption/desorption scheme by an example of a cyclic disulfide redox molecule.
FIG. 2 is a CO₂ adsorption/desorption scheme by another example of a cyclic disulfide redox molecule.
FIG. 3 is a CO₂ adsorption/desorption scheme by an example of an acyclic disulfide redox molecule.
FIG. 4 is a list diagram showing structural formulae of examples of cyclic disulfide-based redox molecules.
FIG. 5 is a distribution diagram showing the CO₂ binding energy at the reaction moiety and the priority of CO₂ adsorption to the reaction moiety as compared with generation of active oxygen species for some examples of oxidation-reduction molecules.
FIG. 6 is a cross-sectional view schematically representing an example of a carbon dioxide adsorption-desorption device according to the approach.
FIG. 7 is a cross-sectional view schematically representing an electrochemical cell that may be included in another example of a carbon dioxide adsorption-desorption device according to the approach.
FIG. 8 is a graph representing a cyclic voltammetry curve measured in Example 2.

### DETAILED DESCRIPTION

According to one approach, a carbon dioxide adsorbent is provided. The carbon dioxide adsorbent is capable of adsorbing and desorbing carbon dioxide and includes one or more cyclic disulfide structures.

The above approach provides an adsorbent that can realize a carbon dioxide adsorption-desorption device capable of efficiently adsorbing and desorbing carbon dioxide, and a carbon dioxide adsorption-desorption device including the adsorbent.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in a device actually used, but they can be appropriately design-changed considering the following explanations and known technology.

The approaches described below relate to an adsorbent and a device for separating carbon dioxide (CO₂) from a gas containing the carbon dioxide by an electrochemical process. The adsorbent is one that has been found to be capable of realizing an electrical response device that efficiently adsorbs and desorbs carbon dioxide.

### (Carbon Dioxide Adsorbent)

The carbon dioxide adsorbent according to the approach contains one or more cyclic disulfide structures. The carbon dioxide adsorbent can adsorb and desorb carbon dioxide by containing the cyclic disulfide structure. Hereinafter, the carbon dioxide adsorbent may be simply referred to as "adsorbent". A compound or a material containing a cyclic disulfide structure can be produced by applying a known method as appropriate.

According to an approach, there is provided an adsorbent for a device that performs gas adsorption and desorption through an electrochemical swing (electroswing adsorption). The electrochemical swing process is a process of maintaining a specific potential in the forward direction and maintaining a different potential in the reverse direction. In this method, using Red-Ox active groups that can be put into a reduction state at a certain potential and an oxidation state at a different potential makes it possible to adjust affinity for a target adsorption substance. According to the approach, energy is efficiently delivered to act on an electrochemical reaction that results in capture of a target substance (for example, CO₂).

In such an adsorbent, the cyclic disulfide structure exhibits an oxidation-reduction response. Namely, the cyclic disulfide structure functions as a Red-Ox active moiety. In the adsorbent, carbon dioxide is adsorbed and desorbed by the oxidation-reduction response of the cyclic disulfide structure. Specifically, carbon dioxide can be adsorbed to the cyclic disulfide structure in a reduction state, and the carbon dioxide adsorbed to the cyclic disulfide structure can be desorbed in an oxidation state.

It has been reported that a typical adsorbent responsive to oxidation-reduction competes with an oxidation-reduction reaction of oxygen depending on the use environment. In an environment where oxygen exists, active oxygen species may be generated by an oxidation-reduction reaction of oxygen, and it is known that the active oxygen species deteriorate the adsorbent. Therefore, it is desirable that the adsorbent can preferentially exchange electrons even in the presence of oxygen, that is, the adsorbent exhibits a higher oxidation-reduction potential than that of oxygen.

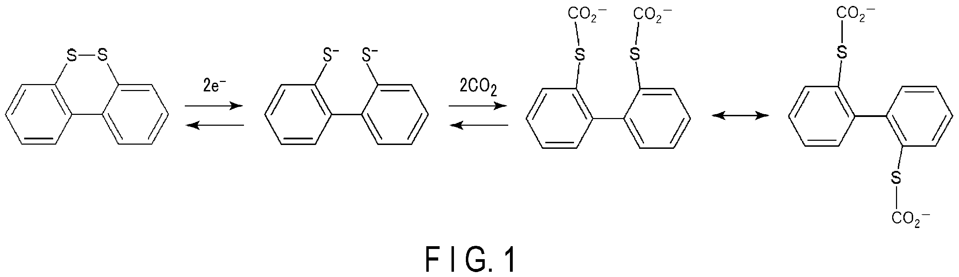

As a result of intensive studies, it was found that the oxidation-reduction potential of a group of molecules having a disulfide bond tends to be higher than the oxidation-reduction potential of oxygen. FIGS. 1 to 3 show examples of carbon dioxide adsorption/desorption schemes by molecules having disulfide bonds. The disulfide bond undergoes S-S cleavage when a reduction potential is applied and is bonded to CO₂ at a negatively charged S moiety. Conversely, when an oxidation potential is applied, the bond between S and CO₂ is relieved, and a disulfide bond is formed again. The above chemical reaction proceeds reversibly.

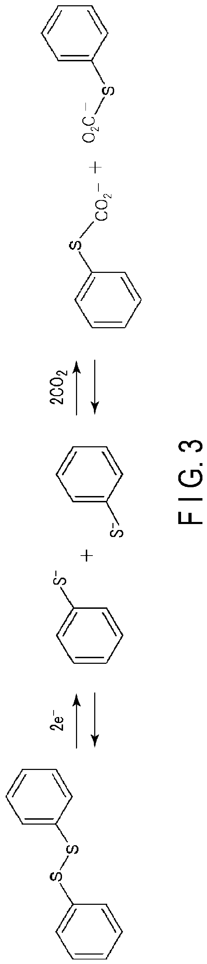

Among the group of molecules having a disulfide bond, in a case where the disulfide bond is not included in a cyclic structure as in the example shown in FIG. 3, the molecule becomes disintegrated after application of a reduction potential, as illustrated. In this manner, with the acyclic disulfide compound, the disulfide bond becomes cleaved during the reduction reaction, becoming independent thiolate ions. As with this example, even with a compound having a cyclic structure, if the scaffold of the disulfide is not rigid, the thiolates are separated from each other by molecular motion after cleavage of the disulfide bond. Even if an oxidation potential is applied, the disulfide structure cannot be regenerated unless the independent ions come close to each other again by chance. Therefore, more energy is required to form a disulfide bond again as compared with recombination of a rigid cyclic disulfide bond. For this reason, even with a cyclic structure, it is difficult to take advantage of the benefit of the ring with a compound that has the disulfide positioned within a linear alkyl, for example. Therefore, the re-formation of the S-S bond is regarded as a disproportionation reaction and is inefficient.

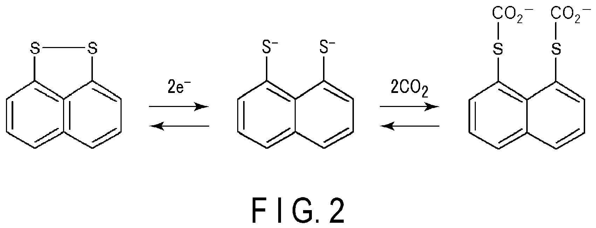

In contrast, in a group of molecules in which a disulfide bond is included in a cyclic structure as in the examples of FIGS. 1 and 2, the same molecule is maintained even after S-S cleavage, which is advantageous at the time of S-S recombination. In such a compound having a cyclic disulfide structure in which a disulfide forms a part of the ring, the distance between two thiolate ions within the molecule is kept substantially constant even if a disulfide bond is cleaved. Therefore, with an adsorbent containing a cyclic disulfide structure, the recombination efficiency of disulfide bonds is increased, and it is possible to provide an electrically responsive carbon dioxide adsorption-desorption device that can efficiently adsorb and desorb carbon dioxide.

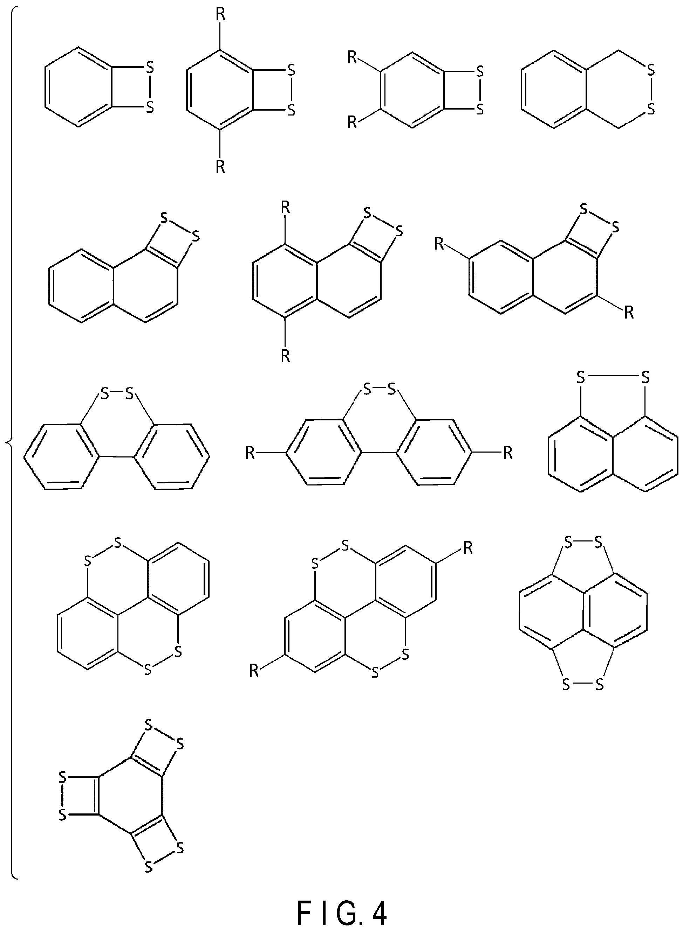

The Red-Ox active moiety having a disulfide bond desirably includes a structure in which sulfide groups are directly bonded to a benzene ring, a naphthalene ring, or a heterocyclic ring. For the reasons described above, inclusion of a cyclic disulfide structure directly bonded to such a rigid structure is advantageous from the viewpoint of reaction energy. Further, it is preferable that the disulfide forms a ring structure through sharing a part of the benzene ring or the naphthalene ring. The cyclic disulfide structure preferably has a cyclic structure of a 4-membered ring or more and a 6-membered ring or less from the viewpoint of maintaining the open-ring and closed-ring structures relatively stable and capable of electrical conduction. The molecule containing a cyclic disulfide structure may have a halogen group, an amino group, a nitro group, an imide group, an imine bond, or a ketone group in addition to the disulfide. FIG. 4 illustrates some examples.

FIG. 4 is a list diagram showing structural formulae of some examples of cyclic disulfide redox molecules. The first row in FIG. 4 shows molecules containing a cyclic disulfide structure in which a disulfide is bonded to one benzene ring to form a 4-membered ring or a 6-membered ring sharing a part thereof with the benzene ring. R in the structural formula represents a substituent such as the halogen group or the amino group described above, for example. The second row shows molecules containing a cyclic disulfide structure in which a disulfide is directly bonded to a naphthalene ring to form a 4-membered ring sharing a part thereof with one aromatic ring of the naphthalene ring. The left side and the center of the third row show molecules containing a cyclic disulfide structure in which a disulfide is bonded so as to form a ring by connecting two phenyl groups contained in a biphenyl, to thereby form a 6-membered ring sharing a part thereof with the biphenyl. The left side and the center of the fourth row show molecules containing a cyclic disulfide structure in which similar bonding are made at two positions to form two 6-membered rings sharing a part thereof with the biphenyl. The right sides of the third and fourth rows show molecules containing a cyclic disulfide structure in which a disulfide is directly bonded to a naphthalene ring to form a 5-membered ring sharing a part thereof with both aromatic rings of the naphthalene ring. The fifth row shows a molecule containing a cyclic disulfide structure in which three disulfides are directly bonded to one benzene ring to form three 4-membered rings each of which shares a part thereof with the benzene ring. The cyclic disulfide molecule capable of functioning as an adsorbent or the cyclic disulfide structure that can be contained in the adsorbent as a Red-Ox active moiety is not limited to the structures of the illustrated molecule.

It is preferable that the Red-Ox active moiety contained in the adsorbent can be reduced in preference over oxygen to adsorb CO₂ even in the presence of oxygen. Since not only competition with the oxidation-reduction reaction of oxygen but also deterioration of the adsorbent due to active oxygen species can be avoided, it is possible to select the application environment of the adsorbent and the gas to be treated without regard for the presence or absence of oxygen. A material that has high binding energy to CO₂ and is lower than oxygen in the highest occupied molecular orbital (HOMO) of a molecule in a reduction state can be preferentially reduced to adsorb CO₂ in the presence of oxygen. Therefore, it is possible to estimate a molecule advantageous as a Red-Ox active moiety in the presence of oxygen by performing first principles calculation to evaluate two evaluation parameters: priority over active oxygen species generation, and CO₂ binding energy.

The disulfide (-S-S-) compound is cleaved by twoelectron reduction to produce two thiolate ions (-S-), and CO₂ is bonded to each of the thiolate ions to form two -S-CO₂⁻. On the other hand, when the oxygen molecule O₂ undergoes one electron reduction, the molecule becomes an active oxygen species O₂⁻ (superoxide). Therefore, the difference between the stabilization energy upon generation of two molecules of O₂⁻ from two molecules of O₂ and the stabilization energy upon generation of two molecules of -S-CO₂⁻ from -S-S- is used as the priority parameter relative to active oxygen species generation. In addition, the stabilization energy due to bond formation with two CO₂ in a state in which -S-S- is reduced to -2 valence is taken as the CO₂ bond energy which is the other parameter. An example is shown below.

The structures and energies of various oxidation-reduction responsive molecules and the interaction/adsorption reaction system between the molecules and CO₂ were calculated by density functional theory (DFT) using B3LYP functional. As a basis function system, 6 -31 + + G (d, p) was used. Regarding the molecular structure, structure optimization calculation was performed using an energy gradient method in a dielectric field of acetonitrile, and the structure obtained by reference vibration analysis was confirmed to be the equilibrium structure. For the calculation in the dielectric field, a dielectric model (polarized continuous body (PCM) model) considering a solvent effect was used. All the calculations were performed using a molecular orbital calculation program Gaussian 16 (manufactured by Hulinks Inc.).

A small CO₂ binding energy indicates a state equivalent to the CO₂ drifting around the molecule. Therefore, the larger the energy, the more stably the bond between the molecule and CO₂ can be maintained. The smaller the priority parameter, the difference between the achievement of the reduction state by the molecule and the generation of active oxygen species becomes more ambiguous. Therefore, the energy difference is preferably larger.

Table 1 shows the calculation results of examples of disulfide molecules containing one cyclic disulfide structure.

**[Table 1]**

| D isulfide molecules containing one cyclic disulfide structure | | | |
|---|---|---|---|
| Chemical structure | R | Binding energy to CO₂ (kJ/mol) | Priority over active oxygen |
| 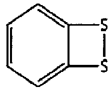 | - | 12.53 | 27.96 |
| 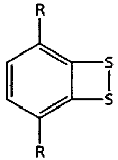 | F | 7.04 | 32.38 |
| | NH₂ | 12.46 | 28.22 |
| 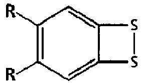 | F | 9.47 | 30.13 |
| | NH₂ | 17.14 | 29.88 |
| 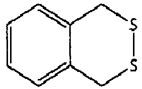 | - | 22.04 | 15.20 |
| 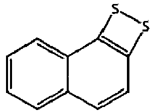 | - | 12.01 | 26.26 |
| 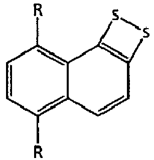 | Cl | 10.28 | 15.84 |
| | NH₂ | 11.27 | 18.10 |
| 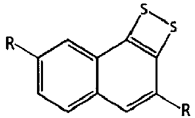 | Cl | 7.46 | 25.4 |
| | NH₂ | 12.08 | 24.90 |
| 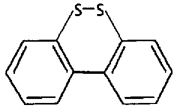 | - | 10.42 | 9.58 |
| 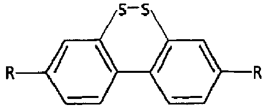 | Cl | 6.32 | 11.48 |
| | NH₂ | 11.95 | 7.44 |
| 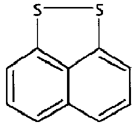 | - | 79.66 | 57.85 |

Similarly, Table 2 shows the calculation results of examples of disulfide molecules containing two cyclic disulfide structures.

**[Table 2]**

| D isulfide molecules containing two cyclic disulfide structures | | | |
|---|---|---|---|
| Chemical structure | R | Binding energy to CO₂ (kJ/mol) | Priority over active oxygen |
| 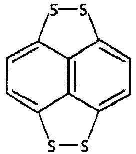 | - | 40.52 | 2.98 |
| 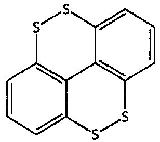 | - | 29.73 | 15.95 |
| 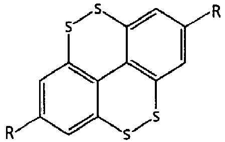 | Cl | 23.04 | 20.97 |
| | NH₂ | 31.69 | 11.30 |

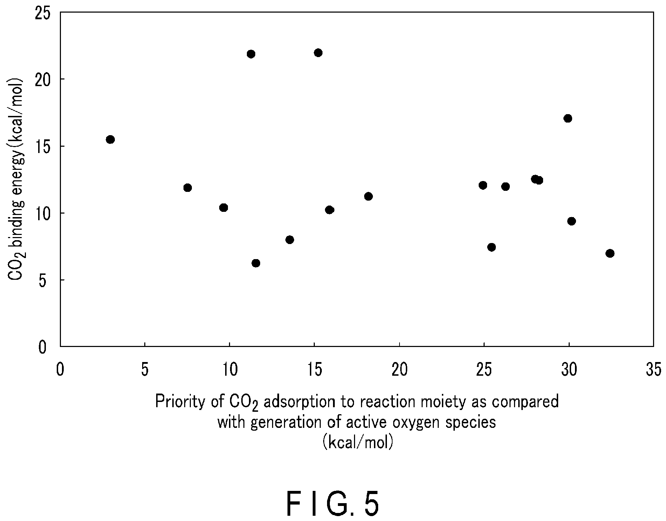

Some of the results shown in Table 1 are summarized in FIG. 5. FIG. 5 is a distribution diagram in which the priority over the generation of active oxygen species is plotted on the horizontal axis and the binding energy between the molecule and CO₂ is plotted on the vertical axis.

The adsorbent may be a porous material containing a cyclic disulfide structure as a Red-Ox active moiety. The adsorbent may be a polymer containing a molecule including a cyclic disulfide structure as a unit structure.

The porous material, which is one of the possible forms of the carbon dioxide adsorbent, includes a porous material having a large number of pores. The pore diameter of the pores is preferably 5 nm or less. Specifically, the porous material is preferably formed of a sub-nanoporous material or a nanoporous material having pores of an angstrom size (1 nm or less) to a nanometer size, and more specifically, 0.5 nm or more and 5 nm or less.

The porous material includes a Red-Ox active moiety that is reduced by an electrical response to cleave a disulfide bond and bond with carbon dioxide and is oxidized by an electrical response to resolve the bond with carbon dioxide and re-form a disulfide bond, that is, the above-described cyclic disulfide structure. The Red-Ox active moiety may be contained as a functional group in the molecular structure constituting the porous material. The Red-Ox active moiety is not limited to the molecules and compounds described above as examples, and derivatives thereof and other molecules and compounds having a cyclic disulfide structure can also be used.

The content of the cyclic disulfide molecule exhibiting redox activity according to electrical response contained in the porous material is preferably 10 mass% or more to 80 mass% or less, and more preferably 20 mass% or more to 75 mass% or less, with respect to the total mass of the porous material.

In general, the larger the amount of the active groups contained in the adsorbent, the greater the adsorption amount and desorption amount of carbon dioxide per unit volume of the adsorbent. Therefore, from the viewpoint of energy consumption, the size of plant equipment, and treatment efficiency, it is desirable to have a large amount of active groups.

The content of the cyclic disulfide-based molecule exhibiting redox activity due to electrical response is preferably 90 mass% or less with respect to the total mass of the porous material. With this content, the amount of the Red-Ox active moiety per unit volume of the porous material can be made appropriate, so that the Red-Ox active groups are not excessively close to each other, and pores can be maintained. In addition, since carbon dioxide can easily access the active group, the active group can be sufficiently utilized. The content of the cyclic disulfide-based molecule is more preferably 75 mass% or less.

By setting the content of the Red-Ox active moiety to 10 mass% or more, sufficient adsorption amount and adsorption rate of carbon dioxide can be obtained, and excellent treatment efficiency can be obtained. Therefore, the porous material in which the content of the Red-Ox active moiety is within the above range is advantageous for use in carbon dioxide recovery in that, since the porous material has not only a large carbon dioxide adsorption amount and a high carbon dioxide adsorption rate, but also has a large carbon dioxide desorption amount and a high carbon dioxide desorption rate (reaction rate), whereby recovery of carbon dioxide can be performed efficiently.

Specific examples of the cyclic disulfide molecule capable of functioning as the Red-Ox active moiety in the porous material include molecules having an amino group or a carboxyl group as the functional group R among the molecules illustrated in FIG. 4. Molecules having an amino group or a carboxyl group as the functional group R present at symmetrical positions of the ring as illustrated can be suitably incorporated into the molecular structure of the porous material.

As in the above example, the cyclic disulfide molecules as active reaction points in the porous material are preferably chemically highly stable because the molecules are regenerated by desorbing CO₂ after adsorbing CO₂ and repeatedly used.

The porous material preferably contains one or more porous substances selected from the group consisting of a covalent-organic framework (COF) having electroactivity, a metal-organic framework (MOF), a porous carbon material, zeolite, porous silica, and porous alumina. For example, the porous material may include a COF having electrical responsiveness. Alternatively, the porous material may contain an MOF having electrical responsiveness.

The presence or absence of the cyclic disulfide structure can be estimated based on Raman spectroscopy. When strong light emission derived from stretching vibration of the S-S bond is observed at 430 cm⁻¹ to 550 cm⁻¹, it can be determined that disulfide is contained. According to the results of the Raman spectroscopic measurement of a sample containing a cyclic disulfide structure, for example, strong light emission derived from stretching vibration of an aliphatic S-C bond at 630 cm⁻¹ to 790 cm⁻¹ or strong light emission derived from stretching vibration of an aromatic S-C bond at 1060 cm⁻¹ to 1100 cm⁻¹ can be observed, and in some cases, strong light emission derived from stretching vibration of a C-C bond at a crosslinked portion between benzene rings may be observed at 1280 cm⁻¹ to 1300 cm⁻¹. Based on ¹H NMR (nuclear magnetic resonance) and ¹³C NMR measurement, a structure forming a disulfide-containing ring structure can be estimated. Raman spectrometry and NMR spectrometry are combined to examine whether the carbon dioxide adsorbent has a cyclic disulfide structure.

The carbon dioxide adsorbent described above contains one or more cyclic disulfide structures. The adsorbent can efficiently adsorb and desorb carbon dioxide even in the presence of oxygen.

### (Carbon Dioxide Adsorption-desorption Device)

The carbon dioxide adsorption-desorption device according to the approach includes the carbon dioxide adsorbent according to the above-described approach.

As described above, the adsorbent can exhibit redox activity by electrical response. Therefore, the carbon dioxide adsorption-desorption device can adsorb and desorb carbon dioxide to and from the Red-Ox active moiety (disulfide structure) of the adsorbent by a change in potential applied to the device. Such a device using the adsorbent that adsorbs and desorbs carbon dioxide with the electrically responsive Red-Ox active moiety can adsorb and desorb carbon dioxide at room temperature. Therefore, the device can adsorb and desorb carbon dioxide with low energy.

Such a device can suitably adsorb carbon dioxide as described above and can be suitably applied to an apparatus for recovering carbon dioxide from factory exhaust gases or the atmosphere. For example, a carbon dioxide recovery system can be constructed using the carbon dioxide adsorption-desorption device.

Such a device may include an electrode for applying a charge to the Red-Ox active moiety of the disulfide adsorbent. In the device, the adsorbent may be included in the electrode (working electrode). The electrode preferably has a porous form such as a mesh shape so that more adsorbent can exchange electrons. The adsorbent can also be dispersed inside the porous electrode. The adsorbent may be dispersed in a solution within the device. The solution containing the adsorbent and the electrode may be arranged such that the solution and the electrode are in electrical contact with each other in the device.

The electrode may further include a current collector. For example, the adsorbent may be supported on the current collector and included in the electrode in the form of the porous material described above, in a state of being dispersed in another porous structure, or in a state of modifying an electrically conductive member. For example, the porous material may be formed onto the surface of the current collector.

The current collector can function as a conductor for transferring charge to the adsorbent to cause the Red-Ox active moiety to electrically respond. By varying the potential of the current collector, the Red-Ox active moiety included in the adsorbent can be oxidized and reduced, and carbon dioxide can be adsorbed to and desorbed from the moiety.

The porous material and the electro-conductive member can be made into a composite so as to yield a porous composite. The composite can be obtained, for example, by mixing the porous material and the electro-conductive member or modifying (covering) the surface of the electro-conductive member with the porous material.

In the porous composite, the Red-Ox active moiety contained in the adsorbent is preferably close to or in contact with a nearby electro-conductive member. Therefore, it is preferable that the adsorbent covers at least a part of the surface of the electro-conductive member, or that the adsorbent is attached to the electro-conductive member. For example, the above-described COF or MOF may be contained in the porous composite in a manner of covering the electro-conductive member.

The electrode may further include a binder. The binder may be included, or not. The binder can bind the current collector, the porous material, and the electro-conductive member, or bind the current collector and the porous composite, for example. As the binder, for example, polyvinylidene fluoride (PVdF), polymethyl methacrylate (PMMA), or polyimide (PI) may be used.

The carbon dioxide adsorption-desorption device may further include an electrolyte (for example, an electrolytic solution). The adsorbent may be dispersed in the electrolyte solution. Alternatively, the electrolyte may be held in the porous material by the electrode including the porous material or the porous composite. The electrolyte may be contained in pores of the porous material, for example. By including the electrolyte, electrical conductivity is improved, and the ability to adsorb and desorb CO₂ is enhanced.

In the device, an electrode containing the adsorbent or an electrode in electrical contact with a solution in which the adsorbent is dispersed is used as a working electrode. By applying a potential to the working electrode, a charge is applied to the Red-Ox active moiety included in the adsorbent. As such, by controlling the potential of the electrode, the redox state of the adsorbent is switched between the oxidation state and the reduction state. The adsorbent can adsorb carbon dioxide in the reduction state and can desorb carbon dioxide in the oxidation state.

For example, the potential can be applied to the working electrode by using a counter electrode to the working electrode and applying a voltage between these electrodes. For example, the carbon dioxide adsorption-desorption device may include a counter electrode to the electrode included in the device. Namely, as the carbon dioxide adsorption-desorption device, an electrochemical cell using the above working electrode and counter electrode may be configured. Aspects of the device are not limited to electrochemical cells. A specific example of the electrochemical cell is a three-electrode cell further including a reference electrode in addition to the working electrode and the counter electrode.

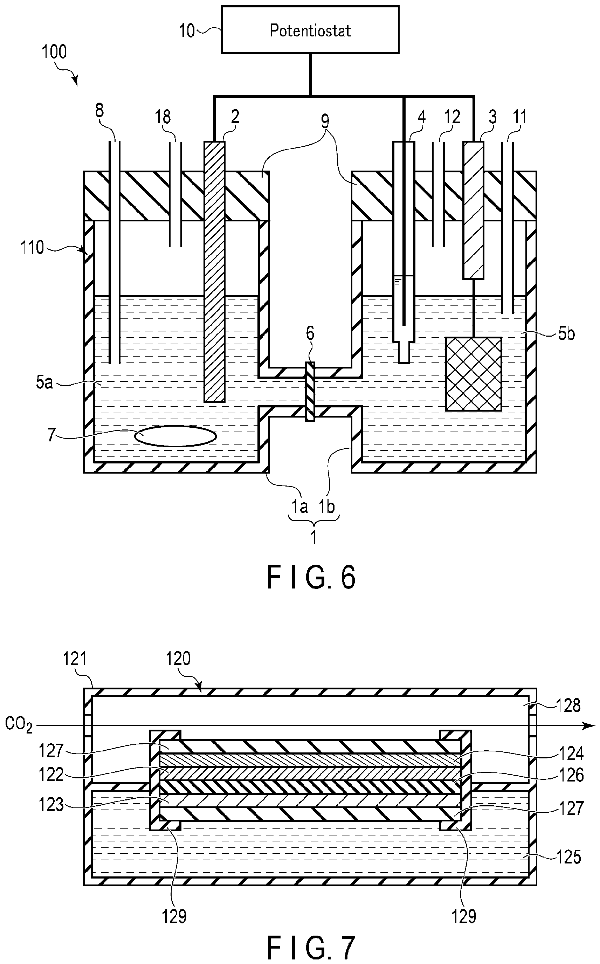

A specific example of a carbon dioxide adsorption-desorption device according to the approach will be described with reference to FIGS. 6 and 7. FIG. 6 is a schematic cross-sectional view of an example of a carbon dioxide adsorption-desorption device according to the approach. FIG. 7 is a schematic cross-sectional view of an electrochemical cell that another example of the device may include.

A carbon dioxide adsorption-desorption device 100 illustrated in FIG. 6 includes an electrochemical cell 110 and a potentiostat 10. The electrochemical cell 110 includes an electrolytic cell 1 including cells 1a and 1b, a working electrode 2, a counter electrode 3, a reference electrode 4, a separator 6, a gas introduction nozzle 8, a gas-flushing inlet 11, a gas-flushing outlet 12, a nozzle 18 for recovering desorbed carbon dioxide, and lids 9. The cell 1a contains an electrolytic solution 5a and a stirrer 7 that stirs the electrolytic solution 5a. The carbon dioxide adsorbent may be contained in the electrochemical cell 110 in a state of being dispersed in the electrolytic solution 5a. The cell 1b contains an electrolytic solution 5b and a stirrer 7 that stirs the electrolytic solution 5b. In one example, the electrolytic solution 5b does not contain the carbon dioxide adsorbent. The lid 9 for preventing intrusion of outside air into the cells 1a and 1b is provided on the opening of each cell, and a gas containing carbon dioxide can be introduced into the electrolytic solution 5a through the nozzle 8 penetrating the lid 9. The lid 9 of the cell 1a is provided with the nozzle 18 for recovering desorbed carbon dioxide. The lid 9 of the cell 1b is provided with the gas-flushing inlet 11 for introducing an inert gas such as nitrogen (N₂) and the gas-flushing outlet 12 for exhausting oxygen (O₂) and other gases that may have been remaining in the electrolytic solutions 5a and 5b, which can be bubbled out by a flushing procedure prior to introducing the gas containing CO₂. Specifically, N₂ can be introduced into the electrolytic solution 5b in the cell 1b through the gas-flushing inlet 11 with the bottom end thereof submerged into the electrolytic solution 5b, as illustrated, whereby bubbling can be performed. O₂ and other gases remaining in the electrolytic solutions 5a and 5b can be expelled by the bubbling, and exhausted out from the cells 1a and 1b respectively through the nozzle 18 and gas-flushing outlet 12. After eliminating the remaining gas by bubbling, the gas-flushing inlet 11 can be drawn out from the electrolytic solution 5b (not illustrated). N₂ can be continually introduced into the cell 1b through the gas-flushing inlet 11 and exhausted out through the gas-flushing outlet 12 to provide a N₂ flow, so as to prevent external oxygen from entering the system during the CO₂ absorption-desorption operation. The potential of the working electrode 2 can be adjusted to a potential where CO₂ adsorbs to the carbon dioxide adsorbent in the electrolytic solution 5a, while the gas containing CO₂ is introduced through the nozzle 8, whereby the contained CO₂ can adsorb to the carbon dioxide adsorbent. The remaining gas in the cell 1a after CO₂ has been recovered therefrom can then be exhausted through the nozzle 18. The potential of the working electrode 2 can then be switched to a potential where CO₂ desorbs from the carbon dioxide adsorbent, and the CO₂ can be recovered from the nozzle 18. Valves for opening and closing the flow paths of the nozzle 8, gas-flushing inlet 11, gas-flushing outlet 12 and nozzle 18 are provided, although not shown in drawing. In the illustrated example, the working electrode 2 and the counter electrode 3 are separately located in the cell 1a and the cell 1b, respectively. The arrangement of the electrodes is not limited to this example, and for example, the counter electrode and the working electrode may be integrated with the separator interposed therebetween. A specific example is an electrochemical cell 120 illustrated in FIG. 7.

The electrochemical cell 120 illustrated in FIG. 7 includes a cell 121, a working electrode 122, a counter electrode 123, and a separator 126. The cell 121 is divided into upper and lower two chambers with the separator 126 interposed therebetween, and the working electrode 122 and the counter electrode 123 are provided on the upper and lower principal surfaces of the separator 126, respectively. An electrolytic solution 125 is contained in the lower chamber of the cell 121, and the counter electrode 123 is in contact with the electrolytic solution 125. The counter electrode 123 may be immersed in the electrolytic solution 125. The working electrode 122 is located in the upper chamber of the cell 121. The working electrode 122 includes a carbon dioxide adsorbent, and may include the porous composite described above, for example. The electrolytic solution 125 contained in the lower chamber does not include an adsorbent. The upper chamber in which the working electrode 122 is present can function as a gas flow path 128, and a gas containing carbon dioxide is passed through the gas flow path 128 so that the contained carbon dioxide can be adsorbed onto the adsorbent in the working electrode 122.

A porous collector electrode 124 may be stacked on the outer side of the working electrode 122 in order to improve power distribution to the working electrode 122, and a porous support 127 for fixing the whole of the working electrode 122 and the porous collector electrode 124 may be stacked on the further outer side thereof. Similarly, the support 127 made of a porous material may be stacked on the outside of the counter electrode 123, as well. The end portion of the thus fabricated stack of the porous collector electrode 124, the working electrode 122, the separator 126, and the counter electrode 123 sandwiched between the supports 127 can be fixed by fixtures 129. Since the working electrode 122 is porous, the porous collector electrode 124 may be omitted as necessary. When the mechanical strengths of the working electrode 122 and the counter electrode 123 are sufficient, the porous support 127 can be omitted. Although not illustrated, the electrochemical cell 120 may also be provided with an inlet and outlet used for bubbling out remaining gas from the electrolytic solution 125 and providing a N₂ flow, as well.

Hereinafter, the current collector, the electro-conductive member, and the electrolytic solution will be described in detail.

### Current Collector

As the current collector, a member made of carbon or metal may be used. With the current collector having better electrical conductivity and a larger surface area, charges can be transferred to more Red-Ox active moieties. Examples of carbon-made members include glassy carbon, a graphite sheet, carbon felt, carbon cloth, a carbon mesh, carbon paper, and a carbon sheet with a gas diffusion layer. Examples of the metal member include a copper plate, a copper sheet, a copper mesh, an aluminum plate, an aluminum sheet, an aluminum mesh, a nickel plate, a nickel sheet, and a nickel mesh. The carbon members and metal members are not limited to the above.

### Electro-conductive Member

As the electro-conductive member, for example, a carbon material having good electrical conductivity can be used. Examples of the electro-conductive member include one or more selected from the group consisting of carbon nanotube, graphite, graphene, carbon nanofiber, and Ketjen black. The shape of the electro-conductive member is preferably linear or flat in order to increase the contact probability, and is preferably a rod shape, a tubular shape, a fiber shape, a sheet shape, or a flake shape.

### Electrolyte

The electrolyte may be a liquid electrolyte (electrolytic solution), for example. The electrolyte includes an ionically bonded salt, for example. Specifically, the ionically bonded salt is preferably one or more selected from the group consisting of an alkali metal salt, an alkaline earth metal salt, a transition metal salt, an amphoteric metal salt, an ammonium salt, an imidazolium salt, a pyridinium salt, and a phosphonium salt. The form of the ionic-bonding salt may be a solid or a liquid, and examples of the liquid include an ionic liquid.

As the cation of the ionically bonded salt, one or more selected from the group consisting of alkali metals such as Li, Na, K, Rb, and Cs; alkaline earth metals such as Mg, Ca, Sr, and Ba; transition metals such as Ti, Cr, Mn, Fe, Co, Ni, Cu, Zn, Zr, Pd, and Ag; amphoteric metals such as Al, Ga, and Sn; ammonium ion and ammonium ion substituted with C1 to C5 lower hydrocarbons (N(CₙH₂ₙ₊₁)₄⁺, n = 1 to 5); imidazolium ions or imidazolium ions with 1 to 3 substituents; pyridinium ions or pyridinium ions with 1 to 3 substituents; piperidinium ions or piperidinium ions with 1 to 3 substituents; pyrrolidinium ions or pyrrolidinium ions with 1 to 3 substituents; phosphonium ions PR₄⁺ (R is hydrocarbon group) with four substituents may be used, and one of the above may be used alone, or plural of the above may be used in combination.

As the anion of the ionic-bonding salt, one or more selected from the group consisting of halogens such as Cl⁻, Br-, and I-, nitrate ion (NO₃⁻), PF₆⁻, BF₄⁻, CF₃SO₃⁻, N(SO₂F₂)₂⁻, N(SO₂CF₃)₂⁻, CH₃COO⁻, CF₃COO⁻, and ClO₄⁻ may be used, and one of the above may be used alone, or plural of the above may be used in combination.

As the ion conductive polymer, for example, one or more selected from the group consisting of polyethylene oxide (PEO), polypropyl oxide (PPO), polyacrylonitrile (PAN), polyvinyl chloride (PVC), an ionic liquid polymer, polyaniline, and polythiophene (PEDOT) are preferably used.

The electrolytic solution may contain a solvent. The solvent of the electrolytic solution may be water or an organic solvent, for example. If the electrolyte is an ionic liquid, a solvent may be used or omitted. As the organic solvent, it is desirable to use one or more selected from the group consisting of acetonitrile, propylene carbonate, ethylene carbonate, vinylene carbonate, vinylethylene carbonate, dimethyl carbonate, diethyl carbonate, ethyl methyl carbonate, succinic anhydride, cyclohexylbenzene, thiophene, toluene, fluorobenzene, and hexafluorobenzene.

### <Manufacturing Method>

The carbon dioxide adsorption-desorption device can be manufactured as follows, for example.

First, a carbon dioxide adsorbent is prepared. For example, an adsorbent is obtained by synthesis.

In order to obtain a device including the adsorbent in a solution state, the prepared adsorbent can be added to the electrolytic solution, and the electrode can be set so as to be in contact with the obtained solution.

When the adsorbent is integrated with the electrode, for example, a porous material containing the adsorbent is synthesized, and a paste containing the obtained porous material is applied onto the current collector to obtain an electrode containing the adsorbent. Specifically, the synthesized porous material is mixed as appropriate with an electro-conductive member, a binder, a solvent, and the like to prepare the paste. This paste is applied onto the current collector to obtain an electrode.

The above is merely an example, and the paste need not necessarily contain a binder. Depending on the properties of the electro-conductive member, the paste may be made into a free-standing electrode by heating and drying. Namely, an electrode including a porous material containing an adsorbent alone may be obtained, for example, without using the current collector.

When an electrolyte is to be included in the electrode, for example, an electrolyte solution is prepared, the prepared solution is cast onto the electrode surface, and then vacuum impregnation is performed, whereby the electrolyte can be included within the electrode.

The carbon dioxide adsorption-desorption device described above includes a carbon dioxide adsorbent containing one or more cyclic disulfide structures. Such a device is a carbon dioxide adsorption-desorption device capable of efficiently adsorbing and desorbing carbon dioxide with low energy.

### (Carbon Dioxide Separation Method)

A carbon dioxide separation method according to an approach includes, by using the carbon dioxide adsorption-desorption device described above, removing carbon dioxide from a gas containing the carbon dioxide by adsorbing the carbon dioxide onto an adsorbent, and regenerating the adsorbent by desorbing the carbon dioxide from the adsorbent. Adsorbing the carbon dioxide onto the adsorbent includes causing an electrical current to flow through the adsorbent at the reduction potential of the adsorbent, and bringing the gas containing the carbon dioxide into contact with the adsorbent in a state where a potential flowing through the adsorbent is maintained at the reduction potential. Regenerating the adsorbent by desorbing the carbon dioxide from the adsorbent includes switching the potential flowing through the adsorbent that had adsorbed carbon dioxide to the oxidation potential of the adsorbent. The regenerated adsorbent can be reused.

By setting the device again to the reduction potential after the separation of the carbon dioxide from the adsorbent, the device is again able to perform the adsorption treatment of carbon dioxide. In this way, the device can be repeatedly used numerous times by performing switching of the potential of electrical current flowing through the adsorbent between the reduction potential and the oxidation potential.

The method for bringing the gas containing carbon dioxide into contact with the adsorbent is not particularly limited. For example, for a carbon dioxide adsorption-desorption device including an electrolytic solution, there is a method by which a gas containing carbon dioxide is bubbled in the electrolytic solution to cause the carbon dioxide to be adsorbed in the electrolytic solution. As another example, there is a method by which the carbon dioxide adsorption-desorption device is configured to expose the adsorbent to a gas flow containing carbon dioxide.

The concentration of the carbon dioxide to be brought into contact with the adsorbent is not particularly limited, but may correspond to a wide range of CO₂ concentrations from an atmospheric level to a level of exhausts from a thermal power plant or the like. Specifically, the concentration of the carbon dioxide is preferably 0.01 vol% or more, and more preferably 0.04 vol% or more to 50 vol% or less.

The environmental temperature at the time of the carbon dioxide adsorption and desorption treatment is usually preferably 0°C or more to 60°C or less. The temperature is more preferably 50°C or lower, and particularly preferably 10°C or more to 45°C or less. The adsorption amount of carbon dioxide increases at a lower temperature. The lower limit value of the treatment temperature can be determined by the gas temperature in the process, the heat recovery target, and the like. The adsorption pressure of carbon dioxide is usually approximately equal to the atmospheric pressure. Higher pressure may also be applied in order to increase adsorption performance.

The method for adsorbing and desorbing carbon dioxide using the carbon dioxide adsorption-desorption device may include, for example, the following steps of:
applying current at reduction potential to a moiety containing the adsorbent;
adsorbing carbon dioxide onto the adsorbent;
flowing electrical current with the potential changed to the oxidation potential; and
desorbing carbon dioxide from the adsorbent.

The carbon dioxide separation method described above includes causing carbon dioxide to be adsorbed onto the adsorbent included in the carbon dioxide adsorption-desorption device, causing the adsorbent that had adsorbed the carbon dioxide to desorb and separate the carbon dioxide, and regenerating the adsorbent. The carbon dioxide is caused to be adsorbed onto the adsorbent in a state where the electrical current flowing through the adsorbent is maintained at the reduction potential. In a state where the electrical current flowing through the adsorbent is switched to the oxidation potential then the oxidation potential is maintained, the carbon dioxide is desorbed. According to this separation method, carbon dioxide can be efficiently adsorbed and desorbed with low energy.

### Examples

Hereinafter, examples of the carbon dioxide adsorption-desorption device using the carbon dioxide adsorbent will be described.

### (Example 1)

### <Synthesis of 1,4-Dihydrobenzo-2,3-dithiane (DHBT)>

According to Org. Biomol. Chem. 2004, 2, 554-561, a,a'-dibromo-o-xylene and urea were reacted with an ethanol solvent to obtain a crude crystal of o-xylene-a,a'-dithiol as an intermediate product. Thereafter, the intermediate product was reacted in acetone using potassium permanganate/copper sulfate pentahydrate as a catalyst to obtain 1,4-dihydrobenzo-2,3-dithiane (DHBT).

### <Production of Device>

The DHBT obtained above and tetrabutylammonium tetrafluoroborate (TBABF₄) as an electrolyte were added to propylene carbonate (PC) by 0.2 mol/L and 0.75 mol/L, respectively, and heated and mixed (about 80°C) to obtain a pale-yellow transparent solution. The obtained solution was set as an electrolytic solution in an electrolytic cell to obtain a device of Example 1. Other details of the device will be described below.

### (Example 2)

### <Synthesis of Dibenzo[c,e][1,2]dithiin (DBDT)>

According to Chem. Eur. J. 2020, 26, 8007-8011, 2-(methylthio)phenylboronic acid and 1-bromo-2-methylthiobenzene were refluxed with a tetrahydrofuran (THF) solvent to obtain 2,2'-bis(methylthio)-1,1'-biphenyl as an intermediate product. The intermediate product was reacted with a reducing agent (sodium naphthalenide) in the THF solvent under hydrochloric acid acidity to obtain dibenzo[c,e][1,2] dithiine (DBDT).

### <Production of Device>

The DBDT obtained above and TBABF₄ were added to PC, and adjusted so as to be 0.2 mol/L and 0.75 mol/L, respectively, to obtain an electrolytic solution. The obtained electrolytic solution was set in an electrolytic cell to obtain a device of Example 2. Other details of the device will be described below.

### (Example 3)

### <Synthesis of Dibenzo[c,e] [1,2]dithiin-3,8-diamine (2NH₂-DBDT)>

According to Scheme 4 described in Eur. J. Org. Chem. 1998, 2409-2416, 3-chloro-1-iodo-5 nitrobenzene and ethyl copper sulfide were reacted in DMF and converted to 3-chloro-1-ethylthio-5-nitrobenzene, then a nitro group was converted to an amino group and azotized by a copper chloride catalyst in pyridine. The obtained azobenzene intermediate was reacted with tetrafluoroboric acid at - 30°C in diethyl ether and rearranged to 4,4'-diaminobenzodiine, and then reacted with sodium in ammonia to obtain dibenzo[c,e] [1,2]dithiine-3,8-diamine (2NH₂-DBDT).

### <Production of Device>

The 2NH₂-DBDT obtained above and TBABF₄ were added to PC, and adjusted so as to be 0.2 mol/L and 0.75 mol/L, respectively, to obtain an electrolytic solution. The obtained electrolytic solution was set in an electrolytic cell to obtain a device of Example 3. Other details of the device will be described below.

### (Example 4)

### <Synthesis of 2NH₂-DBDT-TFP-COF Composite Electrode>

Referring to J. Am. Chem. Soc., 2013, 135, 16821-16824, 2NH₂-DBDT and 1,3,5-triformylphloroglucinol (TFP) was placed in a heat-resistant container at a molar ratio of 1:3, and heated with a dioxane solvent at 120°C for two days. The obtained crude crystals were washed with a dimethylacetamide (DMA) solvent, filtered, and dried under reduced pressure to obtain 2NH₂-DBDT-TFP-COF. The obtained 2NH₂-DBDT-TFP-COF was mixed with carbon nanofibers (CNF) and polyvinylidene fluoride (PVdF) at a mass ratio of 6:3:1 under an N-methylformaldehyde solvent (NMF solvent), and applied onto a carbon felt to obtain an electrode as a composite containing a porous material.

### <Production of Device>

The composite electrode obtained above was set in an electrolytic cell, and a device of Example 4 was obtained using an electrolytic solution prepared by dissolving TBABF₄ in PC at 0.75 mol/L. Other details of the device will be described below.

### (Example 5)

### <Synthesis of Naphtho[1,8-cd]-1,2-dithiole (NDT)>

According to Bull. Chem. Soc. Jpn. 1988, 61, 953-959, 1,8-dichloronaphthalene and sodium α-toluenethiolate were reacted with a hexamethylphosphoric triamide (HMPA) solvent to obtain naphthol[1,8-cd]-1,2-dithiol (NDT).

### <Production of Device>

The NDT obtained above and TBABF₄ were added to PC, and adjusted so as to be 0.2 mol/L and 0.75 mol/L, respectively, to obtain an electrolytic solution. The obtained electrolytic solution was set in an electrolytic cell to obtain a device of Example 5.

### (Example 6)

### <Synthesis of [1,2]benzodithiino[5,4,3-cde] [1,2]benzodithiin (BDBT)>

According to Phosphor. Sulfur., 1991, 63, 51-56, dimethylthiocarbamoyl chloride was added to [1,1'-biphenyl]-2,2,6,6'-tetraol and refluxed under a NaH catalyst in DMF. The obtained carbamoyl intermediate was reacted in THF with methanol having KOH dissolved therein, and the precipitate was filtered and washed with water. Thereafter, the filtered product was dissolved in dichloromethane and adjusted to neutral with hydrochloric acid, then the organic phase was separated, and [1,2]benzodithiino[5,4,3-cde] [1,2]benzodithiin (BDBT) was obtained by a recrystallization method.

### <Production of Device>

The BDBT obtained above and TBABF₄ were added to PC, and adjusted so as to be 0.2 mol/L and 0.75 mol/L, respectively, to obtain an electrolytic solution. The obtained electrolytic solution was set in an electrolytic cell to obtain a device of Example 6.

### (Comparative Example 1)

### <Preparation of Diphenyl Disulfide (DPDS)>

Commercially available diphenyl disulfide (DPDS) was prepared and used as is.

### <Production of Device>

A device of Comparative Example 1 was obtained in the same manner as in Example 1 except that DPDS was used instead of DHBT.

### (Comparative Example 2)

### <Preparation of Thioxanthone (TX)>

Commercially available thioxanthone (TX) was prepared and used as is.

### <Production of Device>

A device of Comparative Example 2 was obtained in the same manner as in Example 1 except that TX was used instead of DHBT.

### (Evaluation)

### <Raman Spectroscopy>

The DBDT prepared in Example 2 was subjected to a Raman spectroscopy measurement.

The Raman spectroscopy measurement was performed as follows. The DBDT was subjected to Raman spectrometry using a Raman spectrometer (LabRAM Evolution manufactured by HORIBA) in a measurement range of 200 cm⁻¹ to 3300 cm⁻¹ at an excitation laser wavelength of 532 nm.

Two strong light emissions derived from the stretching vibration of a S-S bond at 430 cm⁻¹ to 550 cm⁻¹, a strong light emission derived from the stretching vibration of a C-S bond at 630 cm⁻¹ to 790 cm⁻¹, a strong light emission derived from the stretching vibration of a phenyl group ring at 1000 cm⁻¹ to 1150 cm⁻¹, and a strong light emission derived from a C-C bond stretching vibration of the crosslinked portion of a benzene ring at around 1280 cm⁻¹ to 1300 cm⁻¹ were observed, and thus the presence of a S-S bond was confirmed in a state with the ring structure maintained within the molecular structure.

### <NMR Measurements>

The DBDT prepared in Example 2 was subjected to ¹H and ¹³C NMR measurements. The measurement conditions and the peaks observed in the measurement spectrum were as follows.
¹H NMR (CD₂Cl₂, 300 MHz, δ in ppm): 7.2 (dt, 2H), 7.3 (dt, 2H), 7.4 (dd, 2H), 7.6 (dd, 2H), 8.0 (s, 1H)
¹³C NMR (CD₂Cl₂, 75 MHz, δ in ppm): 126.0, 127.9, 128.2, 129.9, 131.6

In particular, with ¹³C NMR, aromatic carbon bonded to sulfur was observed in the vicinity of 130 ppm, and carbon at a portion where an aromatic ring was linked was observed in the vicinity of 132 ppm, and thus the presence of an S-S bond was confirmed in a state with a ring structure maintained in a molecular structure.

### <Electrochemical Measurements>

Each of the devices produced in Examples 1 to 6 and Comparative Examples 1 and 2 was evaluated for electrochemical performance. Specifically, a test device using each of the produced devices was constructed and subjected to cyclic voltammetry (CV) measurement.

In Examples 1 to 3, 5, and 6 and Comparative Examples 1 and 2, a three-electrode electrochemical cell configuration identical to that of the carbon dioxide adsorption-desorption device 100 illustrated in FIG. 6 was adopted for the test device. In the test device, a ϕ 3 mm glassy carbon rod was used as the working electrode 2, an electrolytic solution containing the adsorbent prepared in each of Examples 1 to 3, 5 and 6 and Comparative Examples 1 and 2 was used as a working electrode-side electrolytic solution (5a), a platinum mesh electrode was used as the counter electrode 3, a 0.01 mol/L TBABF₄ electrolytic solution containing 0.75 mol/L ferrocene was used as a counter electrode-side electrolytic solution (5b), and an Ag/Ag⁺ electrode (acetonitrile/0.1 M (M: mol/L) tetrabutylammonium perchlorate solution/0.01 M AgNO₃) was used as a reference electrode 4.

Before the measurement, argon (Ar) gas was passed through a nozzle 8 into the electrolytic solution 5a within a cell 1a for about 30 minutes, and CV measurement was performed using a potentiostat 10. Subsequently, 100% carbon dioxide gas was passed through the nozzle 8 into an electrolytic solution 5a for about 30 minutes, and CV measurement was performed again.

For Example 4, since the adsorbent was integrated with the electrode, measurement was performed with a test device using an electrochemical cell having the configuration shown in FIG. 7. The prepared composite electrode was used as a working electrode 122, and was stacked on a platinum mesh electrode as a counter electrode 123 with a separator 126 interposed therebetween. In order to improve power distribution to the composite electrode, a porous collector electrode 124 was stacked on the outside of the working electrode 122, and a porous support 127 for fixing the entire electrode was stacked further on the outer side thereof. Similarly, a support 127 made of a porous material was stacked on the outside of the counter electrode 123, and the ends were fixed by fixtures 129. An electrolytic solution 125 (0.01 mol/L TBABF₄ solution containing 0.75 mol/L ferrocene without adsorbent) was put into one chamber of a cell 121 having two communicating chambers, and the stack including the working electrode 122 and the counter electrode 123 was set in the cell 121 so as to block the communication between the two chambers and to immerse the counter electrode 123 in the electrolytic solution 125. The chamber into which the electrolytic solution 125 was not put was used as a gas flow path 128 through which Ar gas and carbon dioxide gas were allowed to pass. The separator 126 used had a structure in which the electrolytic solution 125 permeates into the working electrode 122 through the separator 126. CV measurement was performed in the same manner as in Example 1 and the like except that such an electrochemical cell 120 was used.

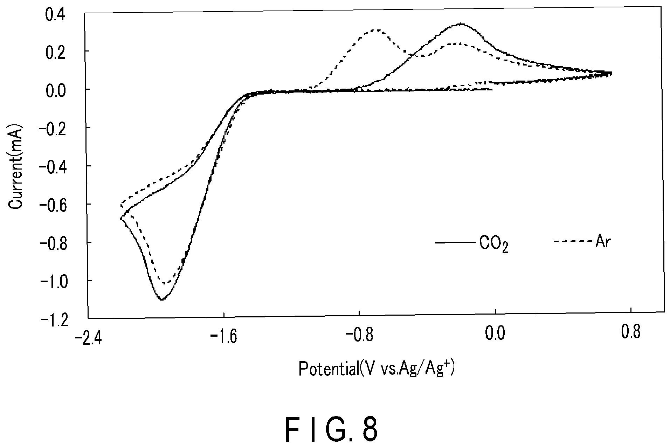

As an example, FIG. 8 shows the CV measurement results of DBDT obtained by the device of Example 1. In the graph of FIG. 8, a curve during the first CV measurement under an Ar atmosphere is indicated by a broken line, and a curve during the second CV measurement under a CO₂ atmosphere is indicated by a solid line. As shown in the graph, a reduction peak associated with S-S bond cleavage around -1.9 V (vs. Ag/Ag⁺) and oxidation peaks associated with S-S recombination around -0.66 V and -0.12 V (vs. Ag/Ag⁺) were observed. In contrast with the spectrum under an inert gas (Ar) atmosphere, a current value decreased at -0.66 V (vs. Ag/Ag⁺) and a current value increased at -0.12 V (vs. Ag/Ag⁺) under a CO₂ atmosphere. Such a phenomenon in which oxidation peaks become gathered into one in a CO₂ atmosphere is a phenomenon that is also observed in the oxidation-reduction reaction of a quinone-based compound.

### <CO₂ Adsorption/Desorption Test>

A carbon dioxide adsorption and desorption test was performed using the devices produced in each of Example 1 to 6 and Comparative Examples 1 and 2. The basic operations of the test are the same as the CV evaluation. First, an inert gas was introduced into the electrolytic solution, and bubbling was carried out for about 30 minutes. As the inert gas, argon gas was used. Thereafter, while bubbling carbon dioxide gas, a potential slightly exceeding the reduction potential of each adsorbent was applied for a set period of time to adsorb carbon dioxide onto the adsorbent. Thereafter, the space above the electrolytic solution was replaced with an inert gas, and a tube for recovering CO₂ was connected to the cell. The carbon dioxide was desorbed from the adsorbent by applying a potential slightly exceeding the oxidation potential of each adsorbent for a set period of time in a state where all portions except the CO₂ recovery tube were sealed. The desorbed carbon dioxide accumulated in the space above the electrolytic solution. After the application of the potential for desorbing the carbon dioxide was stopped, sampling was performed on the space above the electrolytic solution. The collected gas was used to perform quantification by gas chromatography/mass spectrometry (GC/MS), and the amount of carbon dioxide adsorbed and recovered by the adsorbent was determined. Table 3 below shows the amount of CO₂ recovered by each adsorbent. Table 3 also shows the abbreviation and chemical structure of each adsorbent. However, the chemical structure of Example 4 is shown below Table 3 due to its large size.

**Table 3**

| Amounts of CO₂ Recovered in Examples and Comparative Examples | | | |
|---|---|---|---|
| | Adsorbent | Chemical structure of adsorbent | Amount of CO₂ recovered (mmol/g) |
| Example 1 | DHBT | 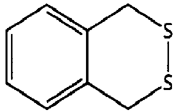 | 1.6 |
| Example 2 | DBDT | 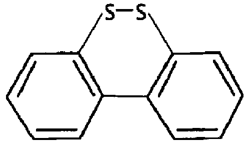 | 2.5 |
| Example 3 | 2NH₂-DBDT | 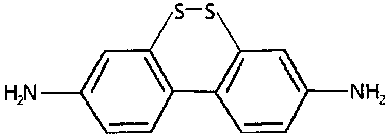 | 2.3 |
| Example 4 | 2NH₂-DBDT-TFP-COF | (Shown outside Table 3) | 2.5 |
| Example 5 | NDT | 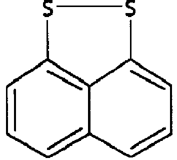 | 3.3 |
| Example 6 | BDBT | 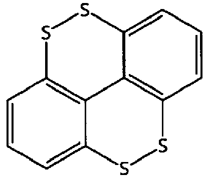 | 3.0 |
| Comparative Example 1 | DPDS | 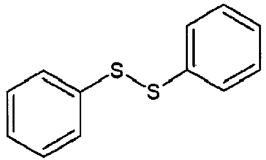 | 2.2 |
| Comparative Example 2 | TX | 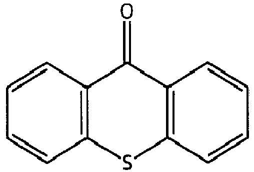 | 1.2 |

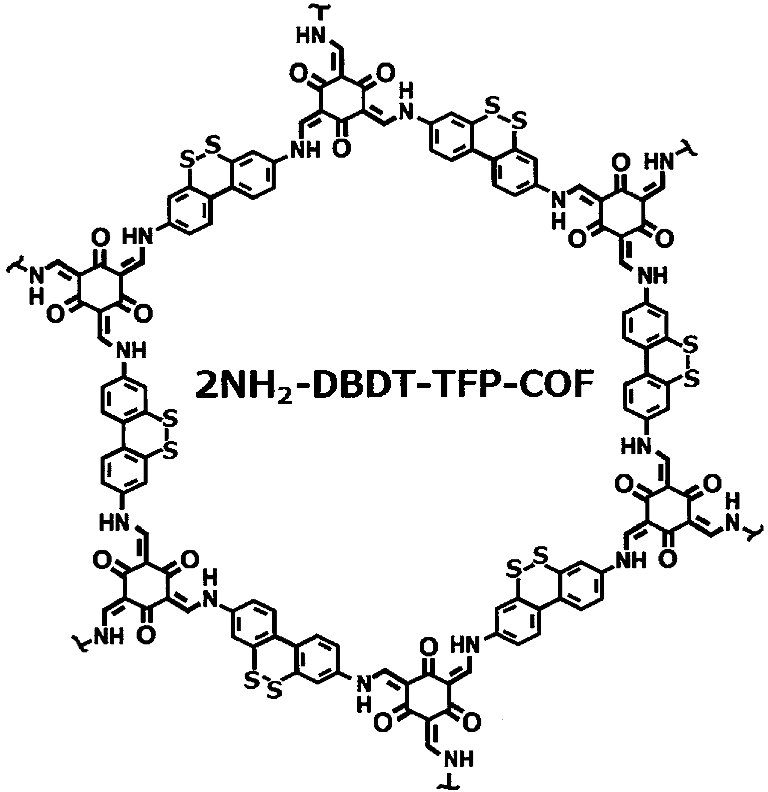

Seen from Example 2 and Comparative Example 1 in Table 3, it can be advantageous that the disulfide bond is cyclic. It can be seen from Example 2 and 3 that for adsorbents having a cyclic disulfide structure, large differences do not arise due to the substituent. It can further be seen from Examples 3 and 4 that since COF was present on the electrode, the exchange of electrons was easier than that of the solution type, and the amount of CO₂ was slightly increased.

According to one or more approach or example described above, a carbon dioxide adsorbent and a carbon dioxide adsorption-desorption device using the same are provided. The carbon dioxide adsorbent includes one or more cyclic disulfide structures, and is able to efficiently adsorb and desorb carbon dioxide. Accordingly, the device is able to efficiently adsorb and desorb carbon dioxide, and can perform efficient recovery of carbon dioxide.

While certain arrangements have been described, these arrangements have been presented by way of example only, and are not intended to limit the scope of the claims. Indeed, the adsorbents and devices described herein may be embodied in a variety of other forms; furthermore various omissions, substitutions and changes in the form of the adsorbents and devices described herein may be made.

Several approaches relevant to the present disclosure are given below.
1. A carbon dioxide adsorbent which is capable of adsorbing and desorbing carbon dioxide, and comprises one or more cyclic disulfide structures.
2. The carbon dioxide adsorbent according to clause 1, wherein the carbon dioxide adsorbent can adsorb carbon dioxide to the cyclic disulfide structure in reduction state, and the carbon dioxide adsorbent can desorb carbon dioxide from the cyclic disulfide structure in oxidation state.
3. The carbon dioxide adsorbent according to clause 1 or 2, wherein the carbon dioxide adsorbent is able to perform oxidation-reduction reaction by electrical response.
4. The carbon dioxide adsorbent according to any one of clauses 1 to 3, wherein the cyclic disulfide structure has a structure in which a sulfide group is directly bonded to a benzene ring, a naphthalene ring, or a heterocyclic ring.
5. The carbon dioxide adsorbent according to any one of clauses 1 to 4, wherein the cyclic disulfide structure has a cyclic structure of a 4-membered ring or more and 6-membered ring or less.
6. The carbon dioxide adsorbent according to any one of clauses 1 to 5, wherein the carbon dioxide adsorbent is a porous metal-organic framework.
7. The carbon dioxide adsorbent according to any one of clauses 1 to 5, wherein the carbon dioxide adsorbent is a porous covalent-organic framework.
8. The carbon dioxide adsorbent according to any one of clause 1 to 5, wherein the carbon dioxide adsorbent is a polymer including a molecule containing the cyclic disulfide structure as a unit structure.
9. The carbon dioxide adsorbent according to any one of clauses 1 to 8, wherein the carbon dioxide adsorbent exhibits an oxidation-reduction potential higher than that of oxygen.
10. A carbon dioxide adsorption-desorption device comprising the carbon dioxide adsorbent according to any one of clauses 1 to 9.

## Claims

1. A carbon dioxide adsorbent which is capable of adsorbing and desorbing carbon dioxide, and comprises one or more cyclic disulfide structures.

2. The carbon dioxide adsorbent according to claim 1, wherein the carbon dioxide adsorbent can adsorb carbon dioxide to the cyclic disulfide structure in reduction state, and the carbon dioxide adsorbent can desorb carbon dioxide from the cyclic disulfide structure in oxidation state.

3. The carbon dioxide adsorbent according to claim 1 or 2, wherein the carbon dioxide adsorbent is able to perform oxidation-reduction reaction by electrical response.

4. The carbon dioxide adsorbent according to any one of claims 1 to 3, wherein the cyclic disulfide structure has a structure in which a sulfide group is directly bonded to a benzene ring, a naphthalene ring, or a heterocyclic ring.

5. The carbon dioxide adsorbent according to any one of claims 1 to 4, wherein the cyclic disulfide structure has a cyclic structure of a 4-membered ring or more and 6-membered ring or less.

6. The carbon dioxide adsorbent according to any one of claims 1 to 5, wherein the carbon dioxide adsorbent is a porous metal-organic framework.

7. The carbon dioxide adsorbent according to any one of claims 1 to 5, wherein the carbon dioxide adsorbent is a porous covalent-organic framework.

8. The carbon dioxide adsorbent according to any one of claims 1 to 5, wherein the carbon dioxide adsorbent is a polymer including a molecule containing the cyclic disulfide structure as a unit structure.

9. The carbon dioxide adsorbent according to any one of claims 1 to 8, wherein the carbon dioxide adsorbent exhibits a oxidation-reduction potential higher than that of oxygen.

10. A carbon dioxide adsorption-desorption device (100) comprising the carbon dioxide adsorbent according to any one of claims 1 to 9.
